# EUROPÄISCHE PATENTSCHRIFT

(11) **EP 1 234 786 B1**
(45) Veröffentlichungstag und Bekanntmachung des Hinweises auf die Patenterteilung: **18.08.2004**
(21) Anmeldenummer: 02100070.8
(22) Anmeldetag: 29.01.2002
(51) Int. Cl.: B65G 1/137

(54) **Kommissioniersystem und Absetzgestell zur Verwendung in einem derartigen Kommissioniersystem**
Commissioning system and charging means to be used in such a system
Système de préparation de commandes et moyens de chargement destiné à être utilisé dans un tel système

(30) Priorität: 23.02.2001 DE 10108943
(43) Veröffentlichungstag der Anmeldung: 28.08.2002
(73) Patentinhaber: SIEMENS AKTIENGESELLSCHAFT, 80333 München (DE)
(72) Erfinder: Schwardt, Axel, 91126, Schwabach (DE); Spiekermann, Uwe, 64331 Weiterstadt (DE)
(74) Vertreter: Wiedemann, Albert, Dipl.-Ing. (FH)

(56) Entgegenhaltungen:
- EP-A- 0 072 571
- EP-A- 0 589 844
- DE-A- 3 524 344
- GB-A- 2 265 893
- US-A- 3 434 604
- US-A- 5 002 449
- HEPTNER K HEPTNER K: "METHODEN DER WARENVERTEILUNG UND AUFTRAGSZUSAMMENSTELLUNG IN DER USA.METHODS OF GOODS DISTRIBUTION AND ORDER FILLING IN THE UNITED STATES" FORDERN UND HEBEN, KRAUSSKOPF VERLAG FUR WIRTSCHAFT. MAINZ, DE, Bd. 19, Nr. 12, 1. September 1969 (1969-09-01), Seiten 727-732, XP000670542 ISSN: 0341-2636

## Beschreibung

Die Erfindung betrifft ein Kommissioniersystem für auf Paletten stapelbare Güter mit einer Kommissioniergasse, auf deren einer Seite die Waren über Bereitstellungsbahnen bereitgestellt werden, so daß sie nach Anforderung entnommen und zu Kommisioniereinheiten zusammengestellt werden können, und mit einer parallel zu der Kommissioniergasse auf einer den Bereitstellungsbahnen abgewandten Seite verlaufenden Transportgasse, auf der eine Fördereinrichtung die Kommissioniereinheiten zu einem Sammelplatz bringt. Außerdem betrifft die Erfindung ein Absetzgestell zur Verwendung in einem derartigen System.

Aus der DE 35 24 344 A1 sind beispielsweise ein Verfahren und eine Vorrichtung zum Ent- und Beladen von Paletten bekannt, wobei in einer Bereitstellungsstation Vollpaletten aus jeweils einheitlichen Gebindelagen entladen werden und wobei die Stückgüter dann in einer Speicher- und Kommissionierungsstation kommissioniert werden. Die auf Paletten zusammengestellten Kommissioniereinheiten werden dann über eine Abtransportbahn abgeführt. Dieses bekannte System weist allerdings in der eigentlichen Kommissionierungsstation ein aufwendiges Speichersystem mit einer Reihe von Speichermodulen auf, welches auch entsprechend viel Platz benötigt. Es dürfte somit nur für die Kommissionierung bei einer sehr großen Zahl unterschiedlicher Stückgüter wirtschaftlich sein.

Daneben gibt es auch die Möglichkeit, die in der Kommissioniergasse durch einen Kommissionierer zusammengestellten Kommissionspaletten unmittelbar auf Rollenförderer zu setzen. Dieses System hat zwar eine recht gute Verfügbarkeit, doch liegen die Investitionskosten bezüglich Mechanik und elektrischer Ausrüstung sehr hoch.

Ziel der vorliegenden Erfindung ist ein Kommissioniersystem der eingangs genannten Art, bei der eine präzise Aufgabe des Ladegutes, also der kommissionierten Paletten, auf die Fördereinrichtung in der Transportgasse mit hohem Durchsatz möglich ist. Das System soll auf beschränktem Raum, zum Beispiel auch in Kühlbereichen, einsetzbar sein und es soll eine hohe Personensicherheit gewährleisten.

Erfindungsgemäß wird dieses Ziel bei einem Kommissioniersystem mit Kommissioniergasse und Transportgasse dadurch erreicht, daß zwischen der Kommissioniergasse und der Transportgasse jeweils Absetzgestelle angeordnet sind, auf welchen jeweils eine auf einer Palette angeordnete Kommissioniereinheit von der Kommissioniergasse aus absetzbar ist und von der aus sie zu der Transportgasse hin ausbringbar ist,
daß die Fördereinrichtung in der Transportgasse mindestens einen Verteilwagen aufweist und
daß in dem Verteilwagen ein Satellitenfahrzeug mit Hubvorrichtung vorgesehen ist, welches quer zur Förderrichtung der Transportgasse jeweils in ein ausgewähltes Absetzgestell verfahrbar ist, um eine dort abgesetzte Palette aus dem Absetzgestell auf den Verteilwagen zu befördern.

Bei dem erfindungsgemäßen Kommissioniersystem sind also zwischen der Kommissioniergasse und der Transportgasse die erwähnten Absetzgestelle in einer Reihe angeordnet, so daß sie wie ein Satelliten-Lagerfach mit einfacher Tiefe von der Transportgasse aus erreichbar sind. Andererseits sind die Absetzgestelle so ausgerüstet, daß die Kommissionspaletten von der Kommissioniergasse aus mit den üblichen Kommissionierstaplern in das Absetzgestell so eingebracht werden können, daß sie durch das Satellitenfahrzeug erreichbar sind.

Durch die einfache Konstruktion dieser Absetzgestelle in Verbindung mit der an sich bekannten Satellitenfahrzeug-Technik ist eine hohe Verfügbarkeit mit verhältnismäßig geringen Kosten zu erreichen. Da die Absetzgestelle außerdem die Transportgasse von der Kommissioniergasse trennen, wird eine hohe Personensicherheit gewährleistet.

In Ausgestaltung der Erfindung wird ein Absetzgestell zur Verwendung in dem Kommissioniersystem vorteilhafterweise mit zwei senkrechten Seitenwänden ausgestattet, welche auf ihren oberen Enden ein auf Palettenbreite abgestimmtes Trageschienenpaar und in dem Mittelbereich darunter ein auf die Breite des Satellitenfahrzeugs abgestimmtes Fahrschienenpaar tragen, wobei zwischen den unteren Enden der Seitenwände ein an die Fahrpratzen eines Kommissonierstaplers angepaßter Einführtrichter gebildet ist. Weitere Ausgestaltungen des Absetzgestells sind in den Unteransprüchen angegeben.

Das erfindungsgemäße Kommissioniersystem besitzt in vorteilhafter Ausgestaltung ein Steuerungssystem, in welchem jeweils die Nummer bzw. der Ort eines Absetzgestells zusammen mit dem Inhalt einer auf ihm abgesetzten Kommissioniereinheit speicherbar sind, wobei das Verteilfahrzeug nach Bedarf zur Abholung einer bestimmten Kommissioniereinheit zu dem zugehörigen Absetzgestell steuerbar ist. Die Position des Absetzgestells kann beispielsweise über einen Handscanner zusätzlich zu den Daten der Kommissioniereinheit in das Steuersystem eingelesen werden.

Um eine hohe Personensicherheit zu gewährleisten, ist in einer bevorzugten Ausgestaltung der Erfindung vorgesehen, daß das Absetzgestell nicht begehbar ist bzw. daß bei einem unbefugten Betreten des Gestells oder der Zwischenräume das Satellitenfahrzeug gestoppt wird. Hierzu ist ein Sicherheits-Lichtgitter vorgesehen, das durch an sich bekannte Lichtschrankenleisten gebildet wird. Um dabei Kosten zu sparen, sind vorzugsweise die paarweise zusammenwirkenden Lichtschrankenleisten (Sender und Empfänger) an unterschiedlichen Absetzgestellen angeordnet, so daß sie ein Sicherheits-Lichtgitter über den Bereich mehrerer Absetzgestelle hinweg bilden.

Die Erfindung wird nachfolgend an einem Ausführungsbeispiel anhand der Zeichnung näher erläutert. Es zeigt
Figur 1 eine erfindungsgemäß gestaltete Kommissionieranlage, schematisch von oben gesehen,
Figur 2 ein Absetzgestell in Vorderansicht,
Figur 3 bis 10 eine schematische Schnittansicht eines erfindungsgemäßen Kommissioniersystems mit verschiedenen Phasen der Kommissionierung.

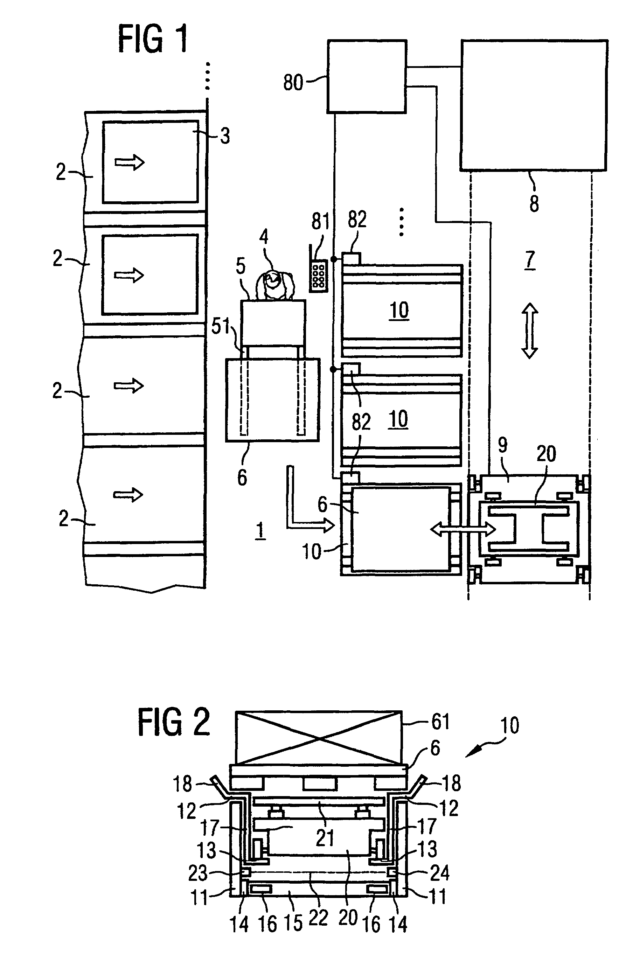

Figur 1 zeigt eine Anlage als Ausführungsbeispiel des erfindungsgemäßen Kommissioniersystems. Dabei ist eine Kommissioniergasse 1 vorgesehen, auf deren einer Seite, in Figur 1 von der linken Seite, die zu kommissionierenden Güter über Bereitstellungsbahnen 2 angeliefert werden. Die Güter sind auf Bereitstellungspaletten 3 gestapelt, die Bereitstellungsbahnen sind beispielsweise Gefällerollenbahnen. In der Kommissioniergasse 1 bewegt sich ein Kommissionierer 4 mit einem Kommissionierstapler 5, der jeweils auf einer Kommissionspalette 6, die auf Gabelarmen 51 des Kommissionierstaplers 5 liegt, lagenweise von den Bereitstellungspaletten 3 entnommene Produkte in Form von Entnahmeeinheiten 31 stapelt. Ist auf der Kommissionspalette 6 eine vollständige Kommissioniereinheit 61 gestapelt, so muß diese Einheit über eine Transportgasse 7 zu einem Sammelplatz 8 gebracht werden. Hierzu dient ein Verteilwagen 9, der in der Transportgasse automatisch gesteuert hin und her fährt.

Zwischen der Kommissioniergasse und der Transportgasse ist eine Reihe von Absetzgestellen 10 angeordnet, die eine einfache Umsetzung der Kommissionspaletten 6 aus der Kommissioniergasse 1 auf die Transportgasse 7 ermöglichen. Ein Absetzgestell 10 besitzt neben einem Stützgerüst 11 als wesentliche Teile im Bereich seines oberen Endes zwei Trägerschienen 12, deren Abstand der Breite einer Kommissionspalette 6 angepaßt ist, und im Bereich darunter zwei Fahrschienen 13, deren Abstand der Fahrwerksbreite eines Satellitenfahrzeugs 20 aus dem Verteilwagen 9 angepaßt ist. In Bodennähe besitzt das Absetzgestell außerdem seitliche Führungsschienen 14, die eine Führung und einen Einführtrichter für die Fahrpratzen 52 des Kommissionierstaplers 5 bilden. Eine Querstrebe 15 bildet einen Anschlag für die Fahrpratzen 52. An ihr sind Gummipuffer 16 angeordnet, um den Anschlag beim Einfahren des Kommissionierstaplers abzufedern. Im vorliegenden Beispiel ist jeweils eine Trägerschiene 12 mit der darunterliegenden Fahrschiene 13 einstückig aus einem Seitenblech 17 gebildet. Außerdem ist jeweils am Ende der Trägerschienen 12 eine Einführschräge in Form eines Seitensteges 18 angeformt.

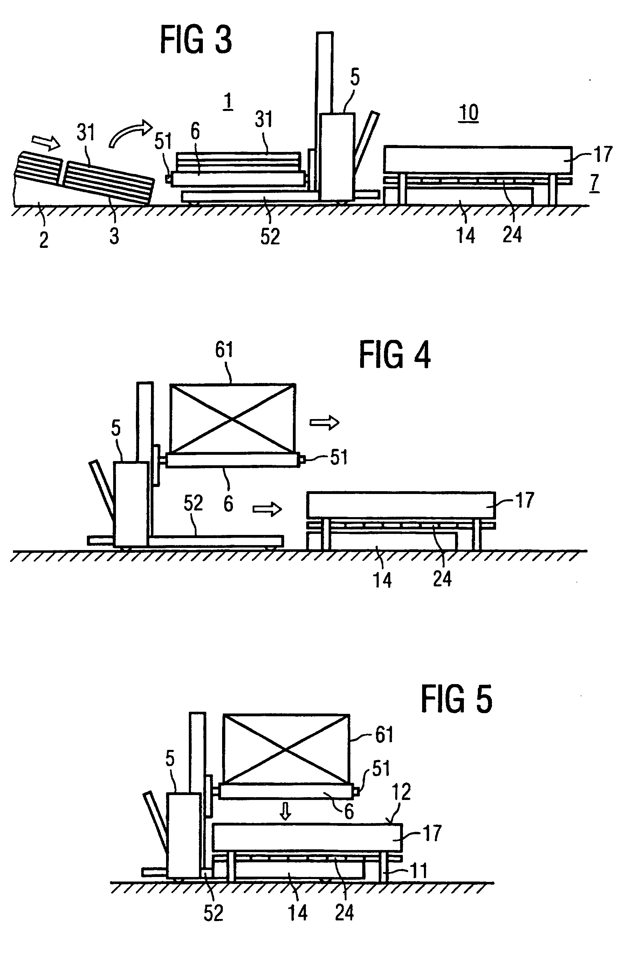

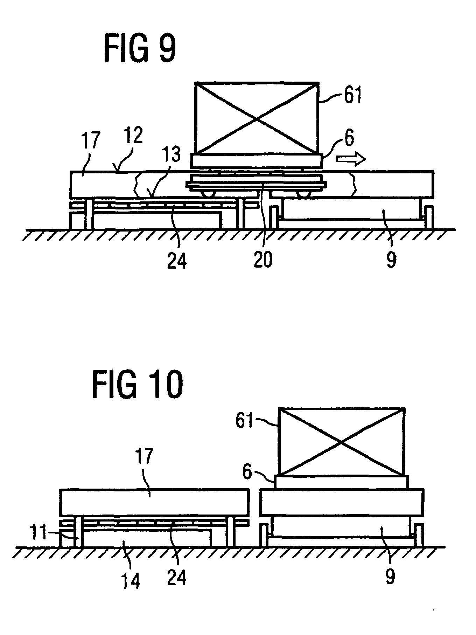

Der Ablauf der Kommissionierung unter Zuhilfenahme des Absetzgestells ist anhand der Figuren 3 bis 10 zu sehen. Der Kommissionierstapler 5 wird von einer Bedienperson 4 in der Kommissioniergasse 1 jeweils an die Bereitstellungsbahn 2 gebracht, auf der die benötigten Entnahmeeinheiten 31 auf Paletten 3 angeliefert werden. Die Entnahmeeinheiten 31 werden in der gewünschten Anzahl auf die Kommissionspalette 6 gelegt, die auf den Gabelarmen 51 des Kommissionierstaplers 5 liegt. Diese Gabelarme 51 befinden sich hierzu in ihrer untersten Position. Sind alle für eine Kommissioniereinheit 61 benötigten Entnahmeeinheiten auf der Kommissionspalette 6 gestapelt, so fährt der Kommissionierstapler an ein freies Absetzgestell 10, wobei die Gabelarme 51 in eine obere Position gebracht werden. Beim Einfahren der Fahrpratzen 52 zwischen die Führungsschienen 14 des Absetzgestells liegen die Gabelarme 51 deshalb oberhalb des Absetzgestells (Figur 4). Nach dem Einfahren werden sie abgesenkt (Figur 5), so daß die Kommissionspalette 6 mit der Kommissioniereinheit 61 auf den Trägerschienen 12 des Absetzgestells aufliegt. Sollte die Palette etwas schräg gestellt sein, so wird sie durch die Einführschrägen 18 der Trägerschienen 12 weitgehend begradigt.

Sobald die Kommissionspalette 6 auf dem Absetzgestell 10 steht, fährt der Kommissionierstapler 5 wieder aus dem Gestell heraus. Der Kommissionierer 4 kann dann beispielsweise über ein Handeingabegerät 81 bzw. einen Scanner sowohl Daten über die Kommissioniereinheit 61 als auch über das benutzte Absetzgestell 10 in ein zentrales Steuerungssystem 80 eingeben. Möglich ist aber auch, am Absetzgestell jeweils eine automatische Ableseeinrichtung 82 vorzusehen, die an der Kommissioniereinheit bzw. den einzelnen Entnahmeeinheiten vorgesehene Stückgutdaten abliest und zusammen mit den Positionsdaten des Absetzgestells in einen Speicher des Steuerungssystems 80 weiterleitet.

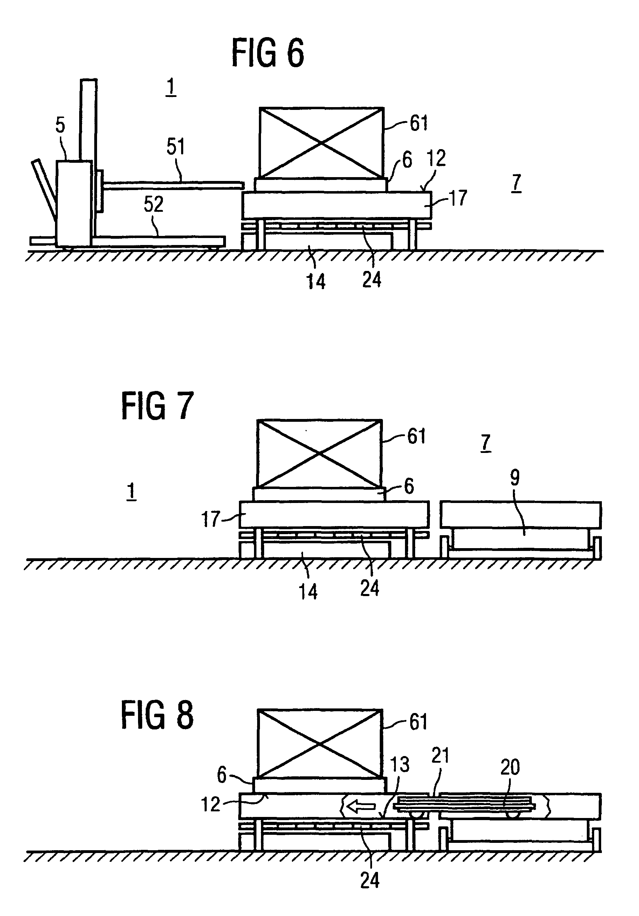

Nachdem im zentralen Steuerungssystem 80 der Ort der bereitgestellten Kommissionspalette 6 bekannt ist, wird ein Verteilwagen 9 über die Transportgasse 7 zu dem betreffenden Absetzgestell 10 gesteuert und zielgenau vor diesem positioniert (Figur 7). Danach fährt das in dem Verteilwagen befindliche Satellitenfahrzeug 20 aus diesem heraus und in das betreffende Absetzgestell 10 hinein, nämlich auf dessen Fahrschienen 13.

Ist das Satellitenfahrzeug 20 unterhalb der Palette 6 angekommen, wird eine auf ihm angeordnete Hubplattform 21 ausgefahren, bis diese die Palette 6 trägt und so weit hochhebt, daß sie das Absetzgestell bzw. die Trägerschienen 12 nicht mehr berührt. Dann fährt das Satellitenfahrzeug 20 zurück in den Verteilwagen 9, der vor dem Gestell noch wartet.

Sobald das Satellitenfahrzeug 20 auf dem Verteilwagen 9 seine Rastposition erreicht hat, fährt letzterer über die Transportgasse 7 zum Sammelplatz 8, von wo die Palette ihrer weiteren Behandlung zugeführt, also beispielsweise einer Sammeleinheit zugeschlagen, wird. Da das betreffende Absetzgestell nunmehr wieder frei ist, kann es mit einer neuen Palette 6 bzw. einer neuen Kommissioniereinheit 61 beladen werden.

Im Bereich unterhalb der Fahrschienen 13 für das Satellitenfahrzeug ist in dem Absetzgestell ein Sicherheits-Lichtgitter 22 durch beiderseitig angeordnete Lichtschrankenleisten 23 und 24 (Lichtsender und Lichtempfänger) gebildet. In Figur 2 sind zwar beide Lichtschrankenleisten 23 und 24 an einem Absetzgestell dargestellt, doch ist es aus Kostengründen durchaus möglich, die paarweise zusammengehörenden Lichtschrankenleisten an entfernt angeordneten Absetzgestellen anzuordnen, so daß sie ein Lichtgitter über den Bereich mehrerer Absetzgestelle bilden.

## Patentansprüche

1. Kommissioniersystem für auf Paletten (6) stapelbare Güter mit
- einer Kommissioniergasse (1), auf deren einer Seite die Waren über Bereitstellungsbahnen (2) bereitgestellt werden, so daß sie nach Anforderung entnommen und zu Kommissioniereinheiten (61) zusammengestellt werden können, und
- mit einer parallel zu der Kommissioniergasse (1) auf einer den Bereitstellungsbahnen (2) abgewandten Seite verlaufenden Transportgasse (7), auf der eine Fördereinrichtung (9) die Kommissioniereinheiten (61) zu einem Sammelplatz (8) bringt,
**dadurch gekennzeichnet,**
**daß** zwischen der Kommissioniergasse (1) und der Transportgasse (7) jeweils Absetzgestelle (10) angeordnet sind, auf welchen jeweils eine auf einer Palette (6) angeordnete Kommissioniereinheit (61) von der Kommissioniergasse (1) aus absetzbar ist und von der aus sie zu der Transportgasse (7) hin ausbringbar ist,
**daß** die Fördereinrichtung in der Transportgasse mindestens einen Verteilwagen (9) aufweist und
**daß** in dem Verteilwagen (9) ein Satellitenfahrzeug (20) mit Hubvorrichtung (21) vorgesehen ist, welches quer zur Förderrichtung der Transportgasse (7) jeweils in ein ausgewähltes Absetzgestell (10) verfahrbar ist, um eine dort abgesetzte Palette (6) aus dem Absetzgestell (10) auf den Verteilwagen (9) zu befördern.

2. Kommissioniersystem nach Anspruch 1,
**dadurch gekennzeichnet, daß** das Absetzgestell (10) jeweils ein Trägerschienenpaar (12) für die Paletten (6) und ein Fahrschienenpaar (13) für das Satellitenfahrzeug (20) aufweist.

3. Kommissioniersystem nach Anspruch 1 oder 2,
**dadurch gekennzeichnet, daß** in der Kommissioniergasse (1) ein Kommissionierstapler (5) bewegbar angeordnet ist, der eine Palette (6) zur Aufnahme der Kommissioniereinheit (61) zu tragen vermag und der die beladene Palette (6) in ein ausgewähltes Absetzgestell (10) zu bringen vermag.

4. Kommissioniersystem nach Anspruch 3,
**dadurch gekennzeichnet, daß** das Absetzgestell (10) von der Kommissioniergasse (1) her offene Kanäle zum Einfahren des Kommissionierstaplers (5) samt Palette (6) aufweist.

5. Kommissioniersystem nach einem der Ansprüche 1 bis 4,
**dadurch gekennzeichnet, daß** die Bereitstellungsbahnen (2) als Gefällerollenbahnen ausgebildet sind.

6. Kommissioniersystem nach einem der Ansprüche 1 bis 5,
**dadurch gekennzeichnet, daß** ein Steuerungssystem vorgesehen ist, in welchem jeweils Positionsdaten eines Absetzgestells (10) zusammen mit Inhaltsdaten einer auf ihm abgesetzten Kommissioniereinheit (61) speicherbar sind und daß das Verteilfahrzeug (9) nach Bedarf zur Abholung einer bestimmten Kommissioniereinheit (61) zu dem zugehörigen Absetzgestell (10) steuerbar ist.

7. Kommissioniersystem nach Anspruch 6,
**dadurch gekennzeichnet, daß** das Absetzgestell (10) seine Positionsdaten in Form eines Codes trägt und daß in der Kommissioniergasse (1) Scanner (81) vorgesehen sind, um diese Positionsdaten zusammen mit den Bestückungsdaten der dort abgesetzten Kommissionspalette (6) in das Steuerungssystem einzugeben.

8. Kommissioniersystem nach Anspruch 6,
**dadurch gekennzeichnet, daß** an jedem Absetzgestell eine Ablesevorrichtung (82) vorgesehen ist, welche Bestückungsdaten einer auf ihm abgesetzten Kommissioniereinheit abzulesen und einem zentralen Speicher (80) zu übermitteln vermag und daß in dem zentralen Speicher eine Zuordnung der übermittelten Bestückdaten zu Positionsdaten des Absetzgestells erfolgt.

9. Kommissioniersystem nach einem der Ansprüche 1 bis 8,
**dadurch gekennzeichnet, daß** im Bereich eines jeden Absetzgestells (10) ein Sicherheits-Lichtgitter (22,23,24) vorgesehen ist.

10. Kommissioniersystem nach Anspruch 9,
**dadurch gekennzeichnet, daß** jeweils paarweise mit Lichtsendern und Lichtempfängern zusammenwirkende Lichtschrankenleisten (23,24) an voneinander entfernt liegenden Absetzgestellen (10) angeordnet sind, so daß sie ein Lichtgitter (22) über den Bereich von mehreren Absetzgestellen (10) bilden.

11. Absetzgestell zur Verwendung in dem Kommissioniersystem gemäß einem der Ansprüche 1 bis 10,
**gekennzeichnet durch** zwei senkrechte Seitenwände, welche auf ihren oberen Enden ein auf Palettenbreite abgestimmtes Trägerschienenpaar (12) und im Mittelbereich ihrer Höhe ein auf die Breite eines Satellitenfahrzeugs (20) abgestimmtes Fahrschienenpaar (13) tragen und zwischen deren unteren Enden eine an die Fahrpratzen (52) eines Kommissionierstaplers (5) angepaßte Führung gebildet ist.

12. Absetzgestell nach Anspruch 11,
**dadurch gekennzeichnet, daß** die Trägerschienen (12) jeweils Seitenstege (18) aufweisen, die an ihrer Oberseite jeweils nach außen erweiterte Einführschrägen bilden.

13. Absetzgestell nach Anspruch 11 oder 12,
**dadurch gekennzeichnet, daß** die Fahrschienen (13) an dem der Transportgasse (7) zugewandten Ende jeweils Einfahrschrägen für die Rollen des Satellitenfahrzeugs (20) aufweisen.

14. Absetzgestell nach einem der Ansprüche 11 bis 13,
**dadurch gekennzeichnet, daß** jeweils eine Trägerschiene (12) und eine darunter angeordnete Fahrschiene (13) einstückig aus einem Blech geformt sind.

## Claims

1. Order-picking system for articles which can be stacked on pallets (6) having
- an order-picking aisle (1), on one side of which the articles are supplied via supply paths (2) with the result that, upon request, they can be removed and put together to form order-picking units (61), and
- a transporting aisle (7), which runs parallel to the order-picking aisle (1) on a side which is directed away from the supply paths (2), and on which a conveying arrangement (9) moves the order-picking units (61) to a collecting location (8),
**characterized in that** arranged between the order-picking aisle (1) and the transporting aisle (7) in each case are set-down frameworks (10), on which in each case one order-picking unit (61) arranged on a pallet (6) can be set down from the order-picking aisle (1) and from which it can be discharged to the transporting aisle (7), **in that** the conveying arrangement, in the transporting aisle, has at least one distributing carriage (9), and **in that** the distributing carriage (9) contains a satellite vehicle (20) with lifting apparatus (21) which can be displaced, transversely to the conveying direction of the transporting aisle (7), into a selected set-down framework (10) in each case in order for a pallet (6) which has been set down there to be conveyed onto the distributing carriage (9) from the set-down framework (10).

2. Order-picking system according to Claim 1, **characterized in that** the set-down framework (10) has a respective pair of carrier rails (12) for the pallets (6) and a pair of running rails (13) for the satellite vehicle (20).

3. Order-picking system according to Claim 1 or 2, **characterized in that** arranged in a movable manner in the order-picking aisle (1) is an order-picking stacker (5) which is capable of bearing a pallet (6) for accommodating the order-picking unit (61) and of moving the loaded pallet (6) into a selected set-down framework (10).

4. Order-picking system according to Claim 3, **characterized in that** the set-down framework (10) has channels which are open from the order-picking aisle (1) and are intended for the introduction of the order-picking stack (5) together with the pallet (6).

5. Order-picking system according to one of Claims 1 to 4, **characterized in that** the supply paths (2) are designed as gravity roller conveyors.

6. Order-picking system according to one of Claims 1 to 5, **characterized in that** a control system is provided, it being possible in each case for position-specific data of a set-down framework (10) together with contents-specific data of an order-picking unit (61) set down thereon to be stored in said control system, and **in that** the distributing vehicle (9), if required, for the purpose of fetching a certain order-picking unit (61), can be controlled for movement to the associated set-down framework (10).

7. Order-picking system according to Claim 6, **characterized in that** the set-down framework (10) carries its position-specific data in the form of a code, and **in that** the order-picking aisle (1) contains scanners (81) in order to enter these position-specific data, together with the loading data of the order-picking pallet (6) set down there, into the control system.

8. Order-picking system according to Claim 6, **characterized in that** provided on each set-down framework is a reading device (82) which is capable of reading loading data of an order-picking unit set down on the set-down framework and of transmitting these data to a central store (80), and. **in that**, in the central store, the loading data transmitted is assigned to position-specific data of the set-down framework.

9. Order-picking system according to one of Claims 1 to 8, **characterized in that** a safety light grille (22, 23, 24) is provided in the region of each set-down framework (10).

10. Order-picking system according to Claim 9, **characterized in that** light-barrier strips (23, .24), which interact with light transmitters and light receivers in pairs in each case, are arranged on set-down frameworks (10) which are remote from one another, with the result that they form a light grille (22) over the region of a plurality of set-down frameworks (10).

11. Set-down framework for use in the order-picking system according to one of Claims 1 to 10, **characterized by** two vertical side walls which, at their top ends, bear a pair of carrier rails (12) coordinated with the pallet width and, halfway up their height, bear a pair of running rails (13) coordinated with the width of a satellite vehicle (20), and between the bottom ends of which is formed a guide which is adapted to the running brackets (32) of an order-picking stacker (5).

12. Set-down framework according to Claim 11, **characterized in that** the carrier rails (12) each have side crosspieces (18) which, on their top side, each form outwardly widened introduction slopes.

13. Set-down framework according to Claim 11 or 12, **characterized in that**, at the end which is directed towards the transporting aisle (7), the running rails (13) each have introduction slopes for the rollers of the satellite vehicle (20).

14. Set-down framework according to one of Claims 11 to 13, **characterized in that** a respective carrier rail (12) and a running rail (13) arranged therebeneath are formed integrally from a metal sheet.

## Revendications

1. Système de préparation de commandes pour des marchandises pouvant être empilées sur des palettes (6), comprenant
- une travée de préparation de commandes (1) sur un côté de laquelle les marchandises sont mises à disposition par l'intermédiaire de voies d'approvisionnement (2), de sorte qu'elles peuvent être prélevées sur demande et être regroupées en unités de commandes préparées (61), et
- une travée de transport (7), qui s'étend parallèlement à la travée de préparation de commandes (1) sur le côté de celle-ci opposé à celui où se trouve les voies d'approvisionnement (2), et dans laquelle un dispositif de transport (9) amène les unités de commandes préparées (61) en un lieu de groupage (8),
**caractérisé en ce qu'**entre la travée de préparation de commandes (1) et la travée de transport (7) sont placés respectivement des châssis de dépôt (10) sur chacun desquels peut être déposée respectivement, à partir de la travée de préparation de commandes (1), une unité de commande préparée (61) placée sur une palette (6), et à partir desquels cette unité de commande préparée peut être transférée vers la travée de transport (7), **en ce que** le dispositif de transport dans la travée de transport comporte au moins un chariot de distribution (9), et **en ce que** dans le chariot de distribution (9) est prévu un véhicule satellite (20) qui comporte un dispositif de levage (21) et qui peut être déplacé, transversalement à la direction de transport de la travée de transport (7), dans un châssis de dépôt (10) sélectionné, en vue de transporter une palette (6) qui y est déposée, du châssis de dépôt (10) sur le chariot de distribution (9).

2. Système de préparation de commandes selon la revendication 1, **caractérisé en ce que** chaque châssis de dépôt (10) comprend une paire de rails de support (12) pour les palettes (6) et une paire de rails de roulement (13) pour le véhicule satellite (20).

3. Système de préparation de commandes selon la revendication 1 ou 2, **caractérisé en ce que** dans la travée de préparation de commandes (1) est disposé de manière déplaçable, un chariot élévateur (5) de préparation de commandes, qui est en mesure de porter une palette (6) destinée à recevoir l'unité de commande préparée (61), et qui est en mesure d'amener la palette (6) chargée dans un châssis de dépôt (10) sélectionné.

4. Système de préparation de commandes selon la revendication 3, **caractérisé en ce que** le châssis de dépôt (10) présente des canaux qui débouchent de la travée de préparation de commandes (1) et dans lesquels peut s'engager le chariot élévateur (5) de préparation de commandes, y compris la palette (6).

5. Système de préparation de commandes selon l'une des revendications 1 à 4, **caractérisé en ce que** les voies d'approvisionnement (2) sont réalisées sous forme de voies à rouleaux en déclivité.

6. Système de préparation de commandes selon l'une des revendications 1 à 5, **caractérisé en ce qu'**il est prévu un système de commande dans lequel peuvent être mémorisées respectivement des données de position d'un châssis de dépôt (10) en commun avec des données de contenu d'une unité de commande préparée (61) qui y est déposée, et **en ce que** le véhicule de distribution (9) peut être piloté, selon les besoins, dans l'optique de chercher une unité de commande préparée (61) déterminée, de façon à venir jusqu'au châssis de dépôt (10) associé.

7. Système de préparation de commandes selon la revendication 6, **caractérisé en ce que** le châssis de dépôt (10) porte ses données de position sous la forme d'un code, et **en ce que** dans la voie de préparation de commandes (1) sont prévus des scanners (81) pour introduire dans le système de commande, ces données de position, en commun avec les données de contenu de la palette de commande préparée (6) qui y est déposée.

8. Système de préparation de commandes selon la revendication 6, **caractérisé en ce que** sur chaque châssis de dépôt est prévu un dispositif de lecture (82), qui est en mesure de lire des données de contenu d'une unité de commande préparée déposée sur ce châssis de dépôt et de les transférer à une mémoire centrale (80), et **en ce que** dans la mémoire centrale est effectuée une affectation réciproque de données de contenu à des données de position du châssis de dépôt.

9. Système de préparation de commandes selon l'une des revendications 1 à 8, **caractérisé en ce que** dans la zone de chaque châssis de dépôt (10) est prévu un réseau de barrières photoélectriques de sécurité (22, 23, 24).

10. Système de préparation de commandes selon la revendication 9, **caractérisé en ce que** des barres de barrières photoélectriques (23, 24) coopérant respectivement par paires avec des émetteurs de lumière et des récepteurs de lumière, sont disposées sur des châssis de dépôt (10) éloignés l'un de l'autre, de sorte qu'elles forment un réseau de barrières photoélectriques (22) sur une zone de plusieurs châssis de dépôt (10).

11. Châssis de dépôt destiné à être utilisé dans le système de préparation de commandes selon l'une des revendications 1 à 10, **caractérisé par** deux parois latérales verticales qui portent sur leurs extrémités supérieures, une paire de rails de support (12) adaptée à la largeur de palette, et dans la zone centrale de leur hauteur, une paire de rails de roulement (13) adaptée à la largeur d'un véhicule satellite (20), et entre les extrémités inférieures desquelles est formé un guidage adapté aux fourches de roulement (52) d'un chariot élévateur (5) de préparation de commandes.

12. Châssis de dépôt selon la revendication 11, **caractérisé en ce que** les rails de support (12) présentent des nervures latérales (18) respectives, qui forment sur leur côté supérieur des rampes inclinées d'entrée s'évasant vers l'extérieur.

13. Châssis de dépôt selon la revendication 11 ou 12, **caractérisé en ce que** les rails de roulement (13) présentent respectivement, à l'extrémité dirigée vers la travée de transport (7), des rampes inclinées d'entrée pour les galets ou roulettes du véhicule satellite (20).

14. Châssis de dépôt selon l'une des revendications 11 à 13, **caractérisé en ce qu'**un rail de support (12) et le rail de roulement (13) respectivement correspondant disposé en-dessous, sont formés d'un seul tenant dans une tôle.
